# EUROPÄISCHE PATENTANMELDUNG

(11) **EP 1 876 116 A1**
(43) Veröffentlichungstag der Anmeldung: **09.01.2008**
(21) Anmeldenummer: 06013089.5
(22) Anmeldetag: 26.06.2006
(51) Int. Cl.: B65G 39/06

(54) **Laufrolle für Führungs- und/oder Transportzwecke**

(71) Anmelder: Carl Freudenberg KG, 69469 Weinheim (DE)
(72) Erfinder: Fietz, Roland, 35275 Neustadt (DE)

(57) **Zusammenfassung**

Laufrolle für Führungs- und/oder Transportrwecke, insbesondere für schnell laufende Aufzüge mit Laufschienen, aus einem Trägerteil mit einer Bandage aus einem Elastomermaterial, wobei die Bandage (3) auf wenigstens einem ihrer axialen Seitenrändern (5, 6) nachgiebig ausgebildet ist.

## Beschreibung

In der Industrie- und Haustechnik gibt es eine Vielzahl von Anwendungen, bei denen Laufrollen für Führungs- und Transportzwecke verwendet werden, beispielsweise bei Aufzügen und Fahrtreppen. Diese Laufrollen bestehen aus einem Trägerteil, vielfach aus Metall oder Kunststoff, das mit einer Bandage aus einem Elastomermaterial umgeben ist. Die Bandage besteht meist aus einem Polyurethan mit einer Härte von oberhalb 90° Shore Härte, welches in der Regel mittels Gießverfahren aufgebracht wird. Die relativ hohe Härte ist erforderlich, um die gegebenen Belastungen aufzunehmen und auch um Abplattungen beim Stillstand der Anlage durch Härtepressung zu vermeiden. Eine zu weiche Bandage mit zu niedriger Festigkeit führt zu starker Deformation und auch zu einer Abplattung, was im Betrieb zu einer hohen Geräuschentwicklung führt, und auch eine Schädigung des zu bewegenden Produktes zur Folge haben kann. So wird bei Aufzügen der Fahrkomfort durch eine zu starke Geräuschentwicklung gemindert. Auch werden Schwingungen, in die von den Rollen berührten Bauteile, übertragen und können sich so störend auf ganze Gebäudekomplexe auswirken.

### Darstellung der Erfindung

Der Erfindung liegt die Aufgabe zugrunde, die Nachteile der bisher bekannten Laufrollen zu vermeiden und eine Laufrolle zu erstellen, die ein verbessertes Dämpfungsverhalten hat. Die Laufrolle soll preiswert herstellbar sein und insbesondere für schnell laufende Aufzüge mit Rollenführungen eingesetzt werden können.

Die Lösung der gestellten Aufgabe wird mit den Merkmalen des Anspruchs 1 erreicht.

Zur Erreichung der besonders guten Dämpfungs- und Führungseigenschaften wird das Trägerteil der Laufrolle mit einer Bandage versehen, die an wenigstens einem ihrer axialen Seitenränder nachgiebig ausgebildet ist. In Versuchen zeigte sich, dass hierdurch eine deutliche Schwingungsdämpfung erreicht wird. Die Laufrollen haben einen ruhigeren Lauf und eine hohe Haltbarkeit.

Die einfachste Form von nachgiebigen Seitenrändern der Bandage kann dadurch erreicht werden, dass in die axialen Seitenränder der Bandage Ringnuten eingebracht sind. Hierdurch entstehen lippenförmige axiale Vorsprünge, die deutlich nachgiebiger als der radial mittlere Teil der Bandage ist. Dabei ist es noch vorteilhaft, dass die Ringnuten wenigstens mit ihren außen liegenden Nutwänden im spitzen Winkel zur Ringfläche der Bandage ausgerichtet sind. Dadurch entsteht eine konkave Ausbildung der Ringnuten und die Lippen werden zu ihrem Außenrand hin stetig weicher in ihrem Verhalten. In besonderen Fällen ist es auch möglich, die Ringnuten durch Querwände zu unterbrechen, um dadurch eine Verstärkung, insbesondere in axialer Richtung, zu erreichen.

Die Bandage selbst wird wie bisher aus einem elastischen polymeren Werkstoff mit einer Härte größer 90° Sh gebildet. Dabei wird vorzugsweise Polyurethan eingesetzt. Möglich ist aber auch die Verwendung eines thermoplastischen Elastomers (TPE) mit einer Härte größer 90° Sh. Eine solche Bandage wird auf einen Tragring aufgebracht. Dieses Trägerteil wird bevorzugt aus Metall hergestellt.

Die Wandstärke der Bandage wird so gewählt, dass sie im Querschnitt im mittleren Bereich eine dickere Wandstärke als an den Seitenrändern hat.

### Ausführung der Erfindung

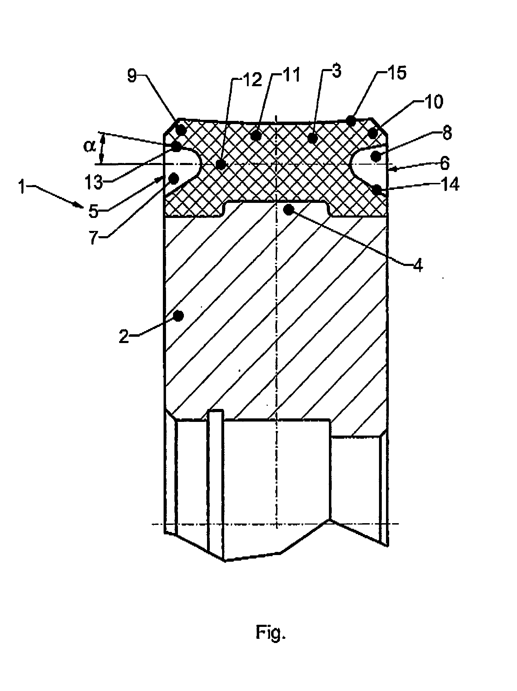

Anhand der beiliegenden Figur wird die Erfindung nachstehend näher erläutert.

Die Figur zeigt den oberen Teil einer Laufrolle 1 im Schnitt. Die Laufrolle 1 besteht aus dem Trägerteil 2 und der Bandage 3. Das Trägerteil 2 ist aus Stahl, die Bandage 3 aus einem Polyurethan mit einer Härte größer 90° Sh. Die Bandage 3 wird durch ein Gießverfahren, bevorzugt durch das Spritzgießverfahren, auf das Trägerteil 2 aufgebracht. Zur Unterstützung der dadurch erreichten kraftschlüssigen Befestigung der beiden Teile miteinander wird das Trägerteil 2 in seiner Mitte auf dem Außenumfang mit einer Verdickung 4 versehen, die eine formschlüssige Verbindung zwischen Trägerteil 2 und Bandage 3 ergibt, so dass zwischen den beiden Teilen sowohl eine kraft- als auch eine formschlüssige Verbindung besteht. An ihren axialen Seitenrändern 5 und 6 ist die Bandage 3 mit den Ringnuten 7 und 8 versehen, so dass die Lippen 9 und 10 gebildet werden, Diese Ringlippen 9 und 10 sind allein durch ihre Gestalt nachgiebiger als der zwischen den Ringnuten 7 und 8 liegende mittlere Teil 11 der Bandage 3. Die Nachgiebigkeit der Lippen 9 und 10 wird noch dadurch unterstützt, dass die außen liegenden Nutwände 13 der Bandage 3 im spitzen Winkel α zu einer durch den Nutgrund geführten Ringfläche 12 liegen. In der Figur sind auch die innen liegenden Nutwände 14 im spitzen Winkel zur Fläche 12 ausgerichtet.

Die Außenfläche 15 der Bandage 3 hat eine leicht konkave Form, wie in der Figur gezeigt, wodurch die Dämpfungswirkung der Lippen 9 und 10 unterstützt wird. Bei einer Laufschiene an einem Aufzug kommen diese Lippen 9 und 10 vor dem mittleren Teil 11 der Bandage 3 an der Schiene zur Anlage, was die Dämpfungswirkung erhöht.

## Patentansprüche

1. Laufrolle für Führungs- und/oder Transportzwecke, insbesondere für Förder- und Hebewerke, wie Aufzüge und Fahrstühle, aus einem Trägerteil mit einer Bandage aus einem Elastomermaterial, **dadurch gekennzeichnet, dass** die Bandage (3) an wenigstens einem ihrer axialen Seitenränder (5, 6) nachgiebig ausgebildet ist.

2. Laufrolle für Führungs- und/oder Transportzwecke nach Anspruch 1 **dadurch gekennzeichnet, dass** in die axialen Seitenränder (5, 6) der Bandage (3) Ringnuten (7, 8) eingebracht sind.

3. Laufrolle für Führungs- und/oder Transportzwecke nach Anspruch 1 oder 2, **dadurch gekennzeichnet, dass** die Ringnuten (7, 8) wenigstens mit ihren außen liegenden Nutwänden (13) im spitzen Winkel (α) zur Ringfläche (12) der Bandage (3) ausgerichtet ist.

4. Laufrolle für Führungs- und/oder Transportzwecke nach einem der Ansprüche 1 bis 3, **dadurch gekennzeichnet, dass** die Ringnuten (7, 8) durch Querwände ( ) unterbrochen ist.

5. Laufrolle für Führungs- und/oder Transportzwecke nach einem der Ansprüche 1 bis 4, **dadurch gekennzeichnet, dass** die Bandage (3) aus einem elastischen polymeren Werkstoff mit einer Härte größer als 90° Sh besteht.

6. Laufrolle für Führungs- und/oder Transportzwecke nach einem der Ansprüche 1 bis 5, **dadurch gekennzeichnet, dass** das Trägerteil (2) aus einem Metall besteht.

7. Laufrolle für Führungs- und/oder Transportzwecke nach einem der Ansprüche 1 bis 6, **dadurch gekennzeichnet, dass** das Trägerteil aus Kunststoff besteht.

8. Laufrolle für Führungs- und/oder Transportzwecke nach einem der Ansprüche 1 bis 6, **dadurch gekennzeichnet, dass** das Trägerteil als Metall-Kunststoff-Verbundteil ausgeführt wird.

## Geänderte Patentansprüche

### Geänderte Patentansprüche gemäss Regel 137(2) EPÜ.

**1.** Laufrolle für Führungs- und/oder Transportzwecke, insbesondere für Förder- und Hebewerke, wie Aufzüge und Fahrstühle, aus einem Trägerteil mit einer Bandage aus einem elastischen polymeren Werkstoff mit einer Härte größer als 90° Sh, **dadurch gekennzeichnet, dass** die Außenfläche (15) der Bandage (3) eine leicht konkave Form hat und die Bandage (3) an wenigstens einem ihrer axialen Seitenränder (5, 6) nachgiebig ausgebildet ist, indem in die axialen Seitenränder (5, 6) der Bandage (3) Ringnuten (7,8) eingebracht sind.

**2.** Laufrolle für Führungs- und/oder Transportzwecke nach Anspruch 1, **dadurch gekennzeichnet, dass** die Ringnuten (7, 8) wenigstens mit ihren außen liegenden Nutwänden (13) im spitzen Winkel (α) zur Ringfläche (12) der Bandage (3) ausgerichtet ist.

**3.** Laufrolle für Führungs- und/oder Transportzwecke nach einem der Ansprüche 1 oder 2, **dadurch gekennzeichnet, dass** die Ringnuten (7,8) durch Querwände ( ) unterbrochen ist.

**4.** Laufrolle für Führungs- und/oder Transportzwecke nach einem der Ansprüche 1 bis 3, **dadurch gekennzeichnet, dass** das Trägerteil (2) aus einem Metall besteht.

**5.** Laufrolle für Führungs- und/oder Transportzwecke nach einem der Ansprüche 1 bis 3, **dadurch gekennzeichnet, dass** das Trägerteil aus Kunststoff besteht.

**6.** Laufrolle für Führungs- und/oder Transportzwecke nach einem der Ansprüche 1 bis 3, **dadurch gekennzeichnet, dass** das Trägerteil als Metall-Kunststoff-Verbundteil ausgeführt wird.
